# EUROPÄISCHE PATENTSCHRIFT

(11) **EP 2 855 131 B1**
(45) Veröffentlichungstag und Bekanntmachung des Hinweises auf die Patenterteilung: **21.10.2015**
(21) Anmeldenummer: 12725375.5
(22) Anmeldetag: 30.05.2012
(51) Int. Cl.: B29C 39/00, B29C 39/26, B29D 11/00, B29C 33/30, B29C 37/00, B29L 11/00, B29C 35/08

(54) **VERFAHREN UND VORRICHTUNG ZUM HERSTELLEN EINER VIELZAHL VON MIKROLINSEN**
METHOD AND DEVICE FOR PRODUCING A PLURALITY OF MICROLENSES
PROCÉDÉ ET DISPOSITIF DE FABRICATION D'UNE PLURALITÉ DE MICROLENTILLES

(43) Veröffentlichungstag der Anmeldung: 08.04.2015
(73) Patentinhaber: Ev Group E. Thallner GmbH, 4782 St. Florian am Inn (AT)
(72) Erfinder: KAST, Michael, A-4600 Wels (AT)
(74) Vertreter: Becker, Thomas
(86) Internationale Anmeldenummer: PCT/EP2012/060183
(87) Internationale Veröffentlichungsnummer: WO 2013/178263

(56) Entgegenhaltungen:
- EP-A1- 2 251 716
- WO-A1-2012/055424

## Beschreibung

Die vorliegende Erfindung betrifft ein Verfahren zur Herstellung einer Vielzahl von Mikrolinsen aus einem Linsenmaterial gemäß Patentanspruch 1. Weiterhin betrifft die vorliegende Erfindung eine Vorrichtung zur Herstellung einer Vielzahl von Mikrolinsen aus einem Linsenmaterial gemäß Patentanspruch 8.

Mikrolinsen finden in erster Linie Anwendung für Geräte, die eine optische Fokussiereinrichtung benötigen, wie beispielsweise Kameras von Mobiltelefonen. Auf Grund des Miniaturisierungsdrucks sollen die funktionalen Bereiche immer kleiner werden. Je weiter die Mikrolinsen miniaturisiert werden sollen, desto schwieriger wird deren optisch korrekte Herstellung, weil gleichzeitig ein enormer Kostendruck für die idealerweise in Massenfertigung herzustellenden Mikrolinsen besteht. Im Stand der Technik werden Mikrolinsen auf einem Trägersubstrat durch unterschiedliche Herstellverfahren erzeugt, wie beispielsweise in der US 6,846,137 B1, US 5,324,623, US 5,853,960 und US 5,871,888 gezeigt. Allen vorgenannten Verfahren ist gemein, dass prinzipbedingt eine gewisse Dicke notwendig ist und das durch die Mikrolinse durchtretende Licht nicht nur die Linse, sondern das Trägersubstrat passieren muss. Auf Grund der gleichzeitig geforderten hohen Qualität und der Anforderungen an höhere Auflösung bei gleichzeitig höherer Brillanz, die unter anderem von der Dicke und der Anzahl der Optiken entlang der optischen Achse, also des Strahlengangs, abhängt, ist eine weitere Optimierung der Mikrolinsen wünschenswert.

Besonders wichtig ist die Formtreue einer Mikrolinse. Darunter versteht man, dass die Mikrolinse das exakte Negativ des Stempels zu sein hat. Sehr oft wird die Formtreue einer Mikrolinse während des Aushärtevorganges der Mikrolinse allerdings nicht beibehalten, da die Mikrolinse schrumpft und daher ein Differenzvolumen zwischen Stempel und Mikrolinse entsteht.

Eine weitere wichtige Eigenschaft einer guten Mikrolinse ist die optische Achse. Besonders wichtig für eine korrekte optische Achse der Mikrolinse ist die Behebung eines Keilfehlers des Stempels gegenüber dem Träger, da bei Vorhandensein eines Keilfehlers beim Prägen die optische Achse nicht exakt senkrecht zum Träger geprägt werden kann.

Der vorliegenden Erfindung liegt die Aufgabe zugrunde, eine Vorrichtung beziehungsweise ein Verfahren anzugeben, mit welchen, insbesondere in Massenfertigung, Mikrolinsen herstellbar sind, die eine hohe Fertigungsgenauigkeit, insbesondere eine sehr hohe Formtreue und eine exakt ausgerichtete optische Achse aufweisen.

Diese Aufgabe wird mit den Merkmalen der Ansprüche 1 und 8 gelöst. Vorteilhafte Weiterbildungen der Erfindung sind in den Unteransprüchen angegeben. In den Rahmen der Erfindung fallen auch sämtliche Kombinationen aus zumindest zwei von in der Beschreibung, den Ansprüchen und/oder den Figuren angegebenen Merkmalen. Bei angegebenen Wertebereichen sollen auch innerhalb der genannten Grenzen liegende Werte als Grenzwerte offenbart gelten und in beliebiger Kombination beanspruchbar sein.

Der Erfindung liegt der Gedanke zugrunde, die Vielzahl von in einem Verfahrensgang hergestellten Mikrolinsen (Mikrolinsenfeld) gleichzeitig zu Prägen und Auszuhärten, jedoch die einzelnen Mikrolinsen räumlich getrennt voneinander auszuhärten. Auf diese Art und Weise werden etwaige durch das Prägen und Aushärten erzeugte Fehler auf die jeweilige Mikrolinse beschränkt, so dass die Fehler sich nicht addieren. Dies hat weiterhin die positive Konsequenz, dass ein Trennschritt zur Trennung der Mikrolinsen voneinander entfallen kann. Die Trennung erfolgt quasi systembedingt, insbesondere durch getrennte Aufbringung oder durch räumliche Trennung mittels der Stempel.

Die Trennung der Mikrolinsen voneinander ist auch die Voraussetzung für die erfindungsgemäße, aktive, kraftregulierte Stempelsteuerung, welche die Formtreue aller Mikrolinsen erst gewährleistet. Wären die Mikrolinsen nicht voneinander getrennt, würde sich beim Aushärten der Mikrolinsen und dem damit einsetzenden Schrumpfungsvorgang das Material über die gesamte Länge des Wafers zusammenziehen und damit positionsabhängig unterschiedlich starke Schrumpfung erzeugen, die zumindest nicht über den ganzen Wafer kompensiert werden könnte.

Die Formtreue kann erfindungsgemäß erhalten werden, wenn sichergestellt wird, dass der Stempel während des Aushärtevorganges aktiv, also gesteuert, den Prägevorgang fortsetzt, und zwar solange, bis sichergestellt ist, dass es zu keiner Formänderung der Mikrolinse mehr kommt, da der Aushärtevorgang vollständig abgeschlossen wurde.

Die Verfahrensschritte sind erfindungsgemäß im Anspruch 1 vorgesehen.

Die erfindungsgemäße Vorrichtung weist die Merkmale gemäß Anspruch 8 auf:
Unter Stempel wird im gesamten Dokument ein Element verstanden, welches mit dem auszuhärtenden Fluid in Kontakt kommt und dieses entsprechend verformt. Im Besonderen kann also auch ein einfacher planarer Wafer aus Si, Glass oder jedem beliebigen anderen Material, selbst wenn er nicht strukturiert ist, als Stempel angesehen werden.

Die Erfindung ist sowohl vorrichtungs- als auch verfahrensgemäß insbesondere dadurch gekennzeichnet, dass das Linsenmaterial jeder Mikrolinse zumindest während des Aushärtens getrennt von dem Linsenmaterial jeder in der X-Y-Ebene benachbarten Mikrolinse ist. Die X-Y-Ebene wird insbesondere durch die erste Prägeseite definiert, wobei eine X-Richtung der X-Y-Ebene senkrecht zu einer Y-Richtung der X-Y-Ebene liegt.

Die Steuerung der erfindungsgemäß beschriebenen Merkmale erfolgt insbesondere durch eine der Vorrichtung zugeordnete, vorzugsweise in diese integrierte Steuerungseinrichtung. Diese erhält Signale von vorrichtungsgemäß vorgesehenen Sensoren oder Erfassungsmitteln und gibt entsprechende Steuerungs- oder Regelungssignale an die das erfindungsgemäße Verfahren ausführenden Organe der Vorrichtung.

Die integrierte Steuereinrichtung besteht vorzugsweise aus Positionsreglern, welche mindestens einen der beiden Stempel bewegen können, sodass eine Aufeinander-zu-Bewegung, also eine Relativbewegung beider Stempel, ermöglicht wird. Des Weiteren sind mindestens drei Kraftmessdosen vorgesehen, welche so in die Vorrichtung eingebaut sind, dass die Ermittlung des Flächendrucks und damit der Flächenkraft auf die X-Y Ebene zwischen den beiden Stempeln ermöglicht wird.

Die Kraftregelung erfolgt insbesondere derart, dass zumindest während des Aushärtens eine Kraftregelung, insbesondere zusätzlich zur Positionssteuerung erfolgt, wobei die Prägekraft eine Schrumpfung des Linsenmaterials während des Aushärtens ausgleichend ausgebildet ist. Dies wird vorzugsweise durch Kraftregelung derart bewirkt, dass die Prägekraft während des Aushärtens gleichbleibt oder nach einer, insbesondere positionsabhängigen und/oder zeitabhängigen Steuerung, zunimmt.

Die Form der Mikrolinsen wird einerseits durch die ersten Linsenformen und andererseits durch den zweiten Stempel, der erfindungsgemäß insbesondere zweite Linsenformen aufweisen kann, bestimmt. Die ersten Linsenformen sind insbesondere konvex oder konkav gekrümmt, während der zweite Stempel insbesondere eine ebene Prägefläche aufweist. Die Linsenformen beziehungsweise Stempel bilden somit die Negative der Mikrolinsen.

Das Linsenmaterial der Mikrolinsen ist erfindungsgemäß insbesondere von der Aufbringung bis zum Aushärten, vorzugsweise während des gesamten erfindungsgemäßen Verfahrens, für jede Mikrolinse separat angeordnet. Mit anderen Worten hat das Linsenmaterial der Mikrolinsen erfindungsgemäß insbesondere keine direkte Verbindung untereinander.

Gemäß einer vorteilhaften Ausführungsform der Erfindung ist sowohl vorrichtungs- als auch verfahrensgemäß vorgesehen, dass während des Aushärtens, kraftkontrollierte und positionsgesteuerte Annäherung der beiden Stempel zueinander erfolgt, sodass allfällige Schrumpfungen der Mikrolinsen durch nachgedrücktes Material kompensiert werden.

Alternativ oder gemeinsam mit der vorhergehenden Ausführungsform besteht eine bevorzugte Lösung darin, dass während des Aushärtens und/oder während des Prägens eine X-Y-Ausrichtung der ersten Prägeseite gegenüber der zweiten Prägeseite in der X-Y-Ebene erfolgt. Die Vorrichtung weist hierzu insbesondere eine Aufnahmeeinrichtung mit einem Justiertisch auf, der eine translatorische und insbesondere zusätzlich eine rotatorische Bewegung der Stempel zueinander ausführend ausgebildet ist.

Alternativ oder gemeinsam mit den vorhergehenden Ausführungsformen besteht eine bevorzugte Lösung darin, dass vor dem Aushärten und/oder vor dem Prägen ein Keilfehlerausgleich durch Keilfehlerausgleichsmittel zur parallelen Ausrichtung der Prägeseiten erfolgt. Die Keilfehlerausgleichsmittel bewirken eine exakte und reproduzierbare, genau senkrechte Lage der optischen Achse jeder Mikrolinse der Vielzahl von Mikrolinsen.

Insbesondere kann der der Keilfehlerausgleich oder die X-Y-Ausrichtung oder die Z-Korrektur nach Unterschreiten eines bestimmten Wertes eines Abstands zwischen der ersten Prägeseite und der zweiten Prägeseite des Stempels, insbesondere laufend, erfolgen. Denn erfindungsgemäß besonders vorteilhaft ist es, die Ausrichtung, Korrektur und/oder den Keilfehlerausgleich kurz vor dem Prägen beziehungsweise Aushärten des Linsenwafers und während des Aushärtens durchzuführen, da zu diesem Zeitpunkt ein geringstmöglicher Abstand zwischen den beiden gegenüberliegenden Prägeseiten vorliegt, so dass, insbesondere mit einer zu den Prägeseiten starren Positionserfassungseinrichtung, eine extrem genaue Erfassung der Position der Prägeseiten und damit der Position des Wafers und dem Stempels ermöglicht wird. Durch die Erfassung der Position der Stempel beziehungsweise der jeweiligen Prägeseiten zueinander ist eine exakte Steuerung der Keilfehlerausgleichsmittel sowie der X-Y-Ausrichtungsmittel möglich. Entsprechend ist es von besonderem Vorteil, wenn die Formung gemäß einer vorteilhaften Ausführungsform der Erfindung positionsgeregelt und/oder kraftgeregelt erfolgt. Erfindungsgemäß könnte eine Positionserfassung mittels kapazitiven und/oder induktiven Abstandmessern und/oder optischen Geräten wie Interferometern erfolgen.

Soweit die Stempel zum Keilfehlerausgleich und/oder zur X-Y-Ausrichtung, insbesondere an deren Prägeseite, vorzugsweise zumindest an einem Umfangsrand der Stempel, jeweils korrespondierende Ausrichtungsmarken aufweisen, ist eine noch exaktere Erfassung der Position der Prägeseiten realisierbar und durch die Anordnung der Ausrichtungsmarken an den Prägeseiten, insbesondere bündig in die Prägeseiten integriert, ist der Abstand zwischen den Ausrichtungsmarken geringstmöglich. Hierdurch wird die Genauigkeit der Positionserfassung durch erfindungsgemäße Erfassungsmittel, insbesondere in Form von Optiken, vorzugsweise Mikroskopen, deutlich erhöht.

Besonders vorteilhaft ist es dabei, wenn das Linsenmaterial transparent für elektromagnetische Strahlen, insbesondere für Licht, ist, so dass während der Ausrichtung die Positionserfassung durch das Linsenmaterial hindurch erfolgt, wobei Markierungen unter den Linsen vorgesehen sind. Dies wird nachfolgend als In-Liquid-Ausrichtung bezeichnet und durch diese Maßnahme ergibt sich ein, insbesondere um den Brechungsindex des Fluids als Multiplikator, vergrößerter Schärfentiefebereich von erfindungsgemäß vorgesehenen Positionserfassungsmitteln, insbesondere Optiken zur Erfassung der Position der Ausrichtungsmarken beziehungsweise der Prägeseiten der Stempel.

Als Konsequenz ist es von besonderem Vorteil, wenn zum Keilfehlerausgleich und/oder zur X-Y-Ausrichtung und/oder zur Z-Korrektur optische Positionserfassungsmittel, insbesondere Optiken, vorgesehen sind, wobei während des Keilfehlerausgleichs und/oder der X-Y-Ausrichtung und/oder Z-Korrektur sowohl die Prägeseite des ersten Stempels oder deren Ausrichtungsmarken als auch die Prägeseite des zweiten Stempels oder deren Ausrichtungsmarken, insbesondere gleichzeitig, im Schärfentiefebereich der, insbesondere zum Stempel starren, optischen Positionserfassungsmittel angeordnet sind. Erfindungsgemäß ist es daher nicht mehr notwendig, die Positionserfassungsmittel während der Positionserfassung beziehungsweise während der Ausrichtung und der Formung zu verschieben, so dass die Positionserfassungsmittel selbst keinen Einfluss auf die Relativposition des ersten Stempels zum zweiten Stempel haben und somit eine zusätzliche Fehlerquelle ausgeschlossen wird. Im Stand der Technik bestand das

Problem, dass entweder ein starres Positionserfassungsmittel mit einem größeren Schärfentiefebereich oder ein bewegliches Positionserfassungsmittel mit einem kleineren Schärfentiefebereich eingesetzt werden mussten. Dieses Dilemma wird durch die vorliegende erfindungsgemäße Maßnahme behoben.

Indem der Abstand zwischen der Prägeseite (oder den Ausrichtungsmarken) des ersten Stempels und der Prägeseite (oder den Ausrichtungsmarken) des zweiten Stempels in Z-Richtung größer als 0 und gleichzeitig kleiner als der Schärfentiefebereich in Z-Richtung während der Positionserfassung ist, wird die Erfassungsgenauigkeit verbessert beziehungsweise erhöht.

Mit Vorteil ist es gemäß einer weiteren Ausgestaltung der Erfindung vorrichtungs- und/oder verfahrensgemäß vorgesehen, dass die Aufbringung des Linsenmaterials durch Tropfenaufbringung erfolgt. Hierfür sind vorrichtungsgemäß Tropfenaufbringmittel, insbesondere ein droplet-Dispenser, vorgesehen. Mit solchen Tropfenaufbringmittel kann eine exakte Dosierung der jeweiligen Menge des Linsenmaterials für jede Mikrolinse gesteuert werden. Die Steuerung erfolgt insbesondere über die Steuerungseinrichtung.

Die Trennung des Linsenmaterials jeder Mikrolinse des Mikrolinsenfeldes erfolgt gemäß einer weiteren, vorteilhaften Ausführungsform der Erfindung, indem die ersten Linsenformen zumindest teilweise, insbesondere vollständig, umgebende Freiräume zur Trennung des Linsenmaterials benachbarter Mikrolinsen beim Aushärten vorgesehen sind. Somit wird das Linsenmaterial der Mikrolinsen zumindest überwiegend, vorzugsweise vollständig, räumlich voneinander getrennt.

Soweit erfindungsgemäß eine Schrumpfung der Mikrolinsen während des Aushärtens, insbesondere durch die Keilfehlerausgleichsmittel und/oder die X-Y-Ausrichtungsmittel und/oder durch Z-Korrektur und/oder die Positionserfassungsmittel, kompensiert wird, wird die Genauigkeit der Mikrolinsen nochmals deutlich erhöht.

Als eigenständige Erfindung ist außerdem ein durch die erfindungsgemäße Vorrichtung und/oder das erfindungsgemäße Verfahren erzeugtes Mikrolinsenfeld vorgesehen, des aus folgenden Merkmalen besteht:
- einem, insbesondere als flaches Substrat, vorzugsweise Wafer, ausgebildeten zweiten Stempel mit einer Vielzahl von aus dem zweiten Stempel geprägten und ausgehärteten Mikrolinsen, die getrennt voneinander auf dem zweiten Stempel angeordnet sind.

Insbesondere weist der zweite Stempel, insbesondere an der Prägeseite, vorzugsweise zumindest an einem Umfangsrand des zweiten Stempels, zum Keilfehlerausgleich und/oder zur X-Y-Ausrichtung und/oder zur Z-Korrektur Ausrichtungsmarken auf.

Vorzugsweise ist die Adhäsion zwischen einem der beiden Stempel und dem Prägematerial größer als zum anderen Stempel. Dadurch wird sichergestellt, dass bei der Entformung der Linsen durch Entfernung eines der Stempel, die Mikrolinsen nur an einem Stempel haften bleiben. Mit Vorzug handelt es sich bei dem Stempel, an welchem die Mikrolinsen zurückbleiben, um den unteren Stempel.

Die Weiterverarbeitung der Linsen nach der Verformung kann auf unterschiedliche Arten erfolgen.

Eine denkbare und bevorzugte Möglichkeit ist die Verwendung eines temporären Trägers als unteren Stempel, auf welchem die Linsen transportiert werden, um in einem späteren Prozess abgenommen zu werden. Beispielsweise könnte ein Flip-Chip-Bonder verwendet werden, um die Linsen aufzunehmen und auf einem anderen Wafer zu platzieren. Die Linsen könnten dementsprechend gestapelt werden, mit Aperturen versehen werden etc.

Eine weitere Möglichkeit besteht darin, einen transparenten Wafer als unteren Stempel zu verwenden, auf welchem die Mikrolinsen permanent verbleiben. In einem weiteren Schritt kann ein Zerschneiden der einzelnen Teilbereiche erfolgen um mehrere einzelne Mikrolinsen mit einem entsprechenden "Backbone" Untergrund zu erhalten.

Verfahrensgemäß offenbarte Merkmale sollen auch als vorrichtungsgemäß offenbart gelten und umgekehrt.

Weitere Vorteile, Merkmale und Einzelheiten der Erfindung ergeben sich aus der nachfolgenden Beschreibung bevorzugter Ausführungsbeispiele sowie anhand der Zeichnungen. Diese zeigen in:

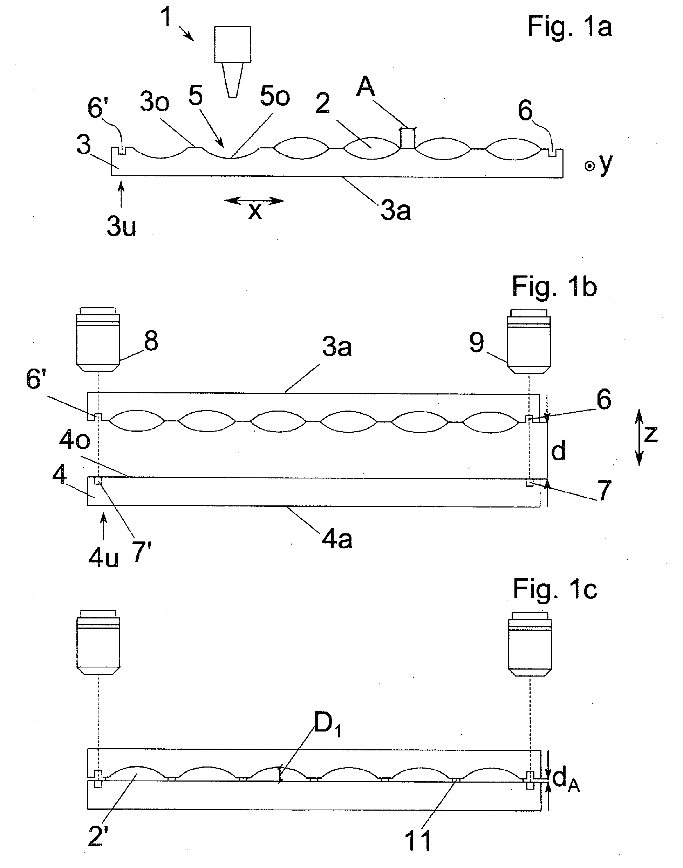

- Fig. 1a:: eine schematische, geschnittene Seitenansicht eines erfindungsgemäßen Vorrichtung in einem ersten erfindungsgemäßen Verfahrensschritt der Aufbringung eines Linsenmaterials zur Herstellung von erfindungsgemäßen Mikrolinsen eines erfindungsgemäßen Mikrolinsenfeldes,
- Fig. 1b:: eine schematische Darstellung eines erfindungsgemäßen Verfahrensschritts einer X-Y-Ausrichtung mittels erfindungsgemäßer Positionserfassungsmittel,
- Fig. 1c:: eine schematische Darstellung eines erfindungsgemäßen Verfahrensschritts eines Prägens durch Prägemittel,

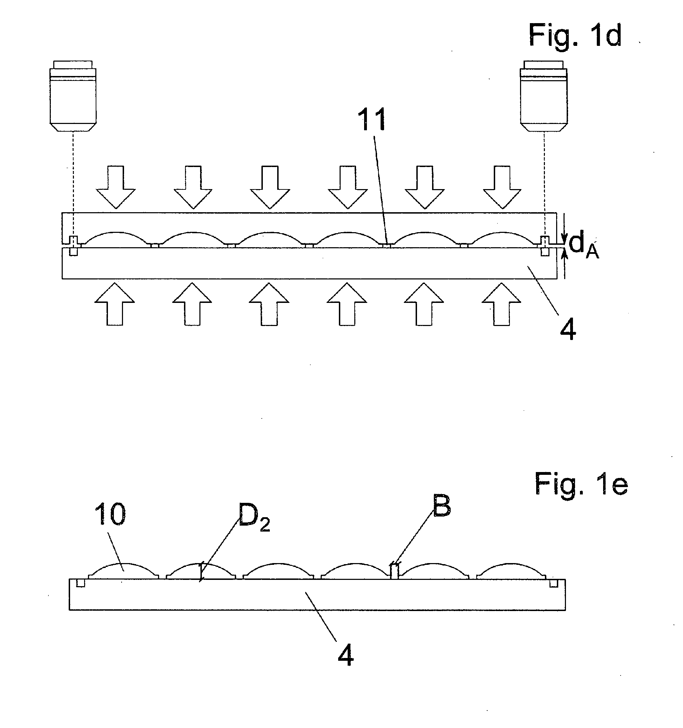

- Fig. 1d::: eine schematische Darstellung eines erfindungsgemäßen Verfahrensschritts eines Aushärtens durch Aushärtemittel und
- Fig. 1e:: eine schematische Darstellung eines erfindungsgemäß geprägten und ausgehärteten Mikrolinsenfeldes.

In den Figuren sind Vorteile und Merkmale der Erfindung mit diese jeweils identifizierenden Bezugszeichen gemäß Ausführungsformen der Erfindung gekennzeichnet, wobei Bauteile beziehungsweise Merkmale mit gleicher oder gleich wirkender Funktion mit identischen Bezugszeichen gekennzeichnet sind.

Die Figuren 1a bis 1e zeigen einen erfindungsgemäßen Verfahrensablauf gemäß einer Ausführungsform der Erfindung zur Herstellung einer Vielzahl von Mikrolinsen 10 (siehe Figur 1e) aus einem Linsenmaterial, nämlich einem aushärtbaren Fluid 2, im vorliegenden Fall einem Polymer.

Figur 1a zeigt einen ersten Stempel 3, der in einer nicht dargestellten ersten Aufnahmeeinrichtung zur Aufnahme des ersten Stempels 3 an einer von einer Prägeseite 3o abgewandten Aufnahmeseite 3a aufgenommen wird. Die Bewegung der Aufnahmeeinrichtung und damit auch des ersten Stempels 3 wird durch eine nicht dargestellte Steuerungseinrichtung gesteuert.

Die Aufnahmeseite 3a ist bei dem in Figur 1a gezeigten, ersten Verfahrensschritt der Aufbringung des zum Prägen der Mikrolinsen 10 vorgesehenen aushärtbaren Fluids 2 nach oben weisend angeordnet, damit die Aufbringung des aushärtbaren Fluids 2 mittels eines Tropfen-Dispensers 1 durch das Gewicht des aushärtbaren Fluids 2 erfolgen kann.

Die Aufbringung erfolgt in fluider, nicht ausgehärteter Form auf eine Vielzahl von an der ersten Prägeseite 3o verteilten ersten Linsenformen 5. Prägeflächen 5o der ersten Linsenformen 5 sind beim gezeigten Ausführungsbeispiel konkav als Negative für die herzustellenden Mikrolinsen 10 geformt. Die Aufbringung des aushärtbaren Fluids 2 erfolgt getrennt für jede herzustellende Mikrolinse 10 auf die jeweilige erste Linsenform 5 mittels eines Tropfen-Dispensers 1. Dieser wird durch die Steuerungseinrichtung gesteuert und bringt eine exakt definierte Menge des aushärtbaren Fluids 2 auf jede der ersten Linsenformen 5 auf.

Im darauf folgenden, in Figur 1b gezeigten Verfahrensschritt wird der erste Stempel 3 um 180 Grad gedreht (flip), so dass die Aufnahmeseite 3a nach oben weist. Dies kann beispielsweise mittels eines Roboterarms erfolgen, der insbesondere auch als Aufnahmeeinrichtung dient.

Der erste Stempel 3 wird gegenüberliegend zu einer nach oben weisenden zweiten Prägeseite 4o eines zweiten Stempels 4 angeordnet und mittels korrespondierender erster Ausrichtungsmarken 6, 6' des ersten Stempels 3 sowie zweiter Ausrichtungsmarken 7, 7' des zweiten Stempels 4 ausgerichtet.

Die Ausrichtungsmarken 6, 6', 7, 7' befinden sich vorzugsweise jeweils an einem Umfangsrand 3u, 4u des ersten und zweiten Stempels 3, 4, vorzugsweise außerhalb eines durch die Linsenformen 5 bedeckten Bereichs.

Hierzu sind Erfassungsmittel in Form zweier Mikroskope 8, 9 sowie Ausrichtungsmittel zur Ausrichtung des ersten Stempels 3 relativ zu dem zweiten Stempel 4 vorgesehen. Die Ausrichtungsmittel sind in der Lage, den ersten Stempel 3 und/oder den zweiten Stempel 4 in einer X-Richtung, einer Y-Richtung und einer Rotationsrichtung sowie deren Winkellage zur horizontalen Ebene (X-Y-Ebene) auszurichten. Die Ausrichtung der Winkellage erfolgt insbesondere durch Keilfehlerausgleichsmittel, die für eine, vorzugsweise ideal parallele, Ausrichtung der Prägeseiten 3o, 4o sorgen. Die Steuerung der Keilfehlerausgleichsmittel sowie der X-Y-Ausrichtungsmittel erfolgt durch die Steuerungseinrichtung, die von den Erfassungsmitteln und gegebenenfalls weiteren Sensoren Werte über die relative und/oder absolute Lage des ersten Stempels 3 und des zweiten Stempels 4 erhalten.

Der zweite Stempel 4 wird durch eine nicht gezeigte Aufnahmeeinrichtung aufgenommen. Die erste und die zweite Aufnahmeeinrichtung können insbesondere als Chucks mit den ersten und/oder zweiten Stempel 3 oder 4 fixierenden Saugbahnen ausgebildet sein. Der erste und/oder zweite Stempel 3, 4 kann insbesondere als Wafer ausgebildet sein, wobei der zweite Stempel 4 im gezeigten Ausführungsbeispiel eine ebene Prägeseite 4o aufweist. Erfindungsgemäß kann auch die zweite Prägeseite 4o zweite Linsenformen aufweisen, die an korrespondierenden Positionen zu den ersten Linsenformen 5 des ersten Stempels 3 angeordnet sind.

Anschließend erfolgt eine Aufeinander-zu-Bewegung des ersten Stempels 3 relativ zu dem zweiten Stempel 4 in einer Z-Richtung. Während der Aufeinander-zu-Bewegung findet insbesondere laufend eine weitere X-Y-Ausrichtung und/oder Keilfehlerausgleich statt.

Die Aufeinander-zu-Bewegung erfolgt bis zu einer Dicke D₁ des aushärtbaren Fluids 2, wobei die Erfassung der Dicke vorzugsweise durch Messung eines Abstands d_{A} zwischen korrespondierenden ersten und zweiten Ausrichtungsmarken 6, 7 oder 6', 7', oder an anderen geeigneten Stellen, an welchen die Oberflächen 4o, 3o der Stempel flach sind, erfolgt (siehe Figur 1c).

In dem in Figur Id gezeigten Verfahrensschritt wird das aushärtbare Fluid 2 durch Aushärtemittel (hier in Form von UV-Strahlen), die durch den ersten Stempel 3 und/oder den zweiten Stempel 4 hindurchtreten, ausgehärtet. Während des Aushärtens erfolgt erfindungsgemäß die Messung der Kraft und die Positionsnachregelung der beiden Stempel zueinander, so dass die Kraft gleich bleibt oder zumindest zunimmt.

Die Aushärtung kann durch jede Art von elektromagnetischer Strahlung erfolgen, insbesondere durch UV Licht. Denkbar wäre auch eine thermische Aushärtung oder jede beliebige andere Aushärtungsart. Die Aushärtungsart hängt meist vom verwendeten Material ab und ist jedem Fachmann auf dem Gebiet bekannt.

Neben der X-Y-Ausrichtung und dem Keilfehlerausgleich wird erfindungsgemäß zumindest eine Schrumpfung des aushärtbaren Fluids 2 in Z-Richtung, insbesondere zusätzlich eine Schrumpfung in X- und Y-Richtung, berücksichtigt und eine Dicke D₂ der Mikrolinsen 10 eingestellt, damit die Mikrolinsen 10 perfekte optische Eigenschaften aufweisen und keine durch Schrumpfung erzeugten Dellen oder Fehlstellen erzeugt werden.

Die Dicke D₁ und D₂ entspricht insbesondere der maximalen Dicke der Linsen in Z-Richtung.

Sobald die Aushärtung erfolgt ist, wird der erste Stempel 3 von dem zweiten Stempel 4 gelöst und es verbleiben erfindungsgemäß voneinander getrennte Mikrolinsen 10 auf dem zweiten Stempel 4. Eine mechanische Trennung nach dem Aushärten kann erfindungsgemäß entfallen.

Die Trennung erfolgt insbesondere durch einen Abstand A zwischen den Trägeflächen 5o, der so bemessen ist, dass nach Prägung und Aushärtung des aushärtbaren Fluids 2 in dem in Figur 1e gezeigten Schritt ein Abstand B zwischen den geprägten und ausgehärteten Mikrolinsen 10 vorhanden ist.

Somit ist während des gesamten Verfahrensablaufs am Umfang jeder Mikrolinse 10 beziehungsweise dem für die Mikrolinse 10 jeweils vorgesehenen aushärtbaren Fluid 2 ein Freiraum 11 vorgesehen, in dem sich das aushärtbare Fluid 2 in gewissen Grenzen ausbreiten oder schrumpfen kann. Hierdurch wird der für die Optik entscheidende Bereich der Mikrolinsen 10 nicht durch entsprechende Verformung beeinträchtigt, so dass die Mikrolinse 10 nach Aushärtung des aushärtbaren Fluids 2 zumindest in den für die Optik entscheidenden mittleren Bereich der Mikrolinsen 10 eine optimale Form mit einer perfekt in Z-Richtung ausgerichteten optischen Achse jeder Mikrolinse 10 aufweist.

### Bezugszeichenliste

- 1: Tropfen-Dispenser
- 2: Aushärtbares Fluid
- 3: Erster Stempel
- 3a: Aufnahmeseite
- 3o: Erste Prägeseite
- 3u: Umfangsrand
- 4: Zweiter Stempel
- 4a: Aufnahmeseite
- 4o: Zweite Prägeseite
- 4u: Umfangsrand
- 5: Erste Linsenformen
- 5o: Prägefläche
- 6, 6': Erste Ausrichtungsmarken
- 7, 7': Zweite Ausrichtungsmarken
- 8: Mikroskop
- 9: Mikroskop
- 10: Mikrolinsen
- 11: Freiräume
- A: Abstand
- B: Abstand
- D₁: (maximale) Dicke
- D₂: (maximale) Dicke
- X: X-Richtung
- Y: Y-Richtung
- Z: Z-Richtung

## Patentansprüche

1. Verfahren zur Herstellung einer Vielzahl von Mikrolinsen (10) aus einem Linsenmaterial mit folgenden Schritten, mit folgendem Ablauf:
- Aufbringung des zum Prägen der Mikrolinsen (10) vorgesehenen Linsenmaterials in fluider Form auf eine Vielzahl von an einer ersten Prägeseite (3o) eines ersten Stempels (3) verteilten ersten Linsenformen (5) zum Prägen der Mikrolinsen (10),
- Drehen des ersten Stempels (3) um 180°, so dass die Aufnahmeseite (3a) nach oben weist,
- Aufeinander-zu-Bewegung des ersten Stempels (3) und eines im Wesentlichen parallel, nämlich in einer X-X-Ebene, und gegenüberliegend zum ersten Stempel (3) angeordneten zweiten Stempels (4) in einer im Wesentlichen senkrecht zur X-Y-Ebene verlaufenden Z-Richtung, insbesondere durch Positionssteuerung,
- Prägen der Mikrolinsen (10) durch Formung und Aushärtung des Linsenmaterials, wobei die Formung durch Aufeinander-zu-Bewegung der ersten und zweiten Prägeseiten (3o, 4o) erfolgt,
wobei beim Prägen eine Prägekraft gemessen wird, mittels der das Prägen, insbesondere zumindest während des Aushärtens, beeinflussbar ist, insbesondere durch Kraftsteuerung, vorzugsweise zusätzlich zu der Positionssteuerung.

2. Verfahren nach Anspruch 1, bei dem das Linsenmaterial jeder Mikrolinse (10) zumindest während des Aushärtens getrennt von dem Linsenmaterial jeder in der X-Y-Ebene benachbarten Mikrolinse (10) ist..

3. Verfahren nach Anspruch 1 oder 2, bei dem während des Aushärtens und/oder während des Prägens eine X-Y-Ausrichtung der ersten Prägeseite (3o) gegenüber der zweiten Prägeseite (4o) in der X-Y-Ebene erfolgt.

4. Verfahren nach einem der vorhergehenden Ansprüche, bei dem der erste Stempel (3) und der zweite Stempel (4), insbesondere an deren Prägeseiten (3o, 4o), vorzugsweise zumindest, an deren Umfangsrändern (3u, 4u), zum Keilfehlerausgleich und/oder zur X-Y-Ausrichtung jeweils zueinander korrespondierende Ausrichtungsmarken (6, 6', 7, 7') aufweisen.

5. Verfahren nach einem der vorhergehenden Ansprüche, bei dem die Aufbringung des Linsenmaterials durch Tropfenaufbringung erfolgt.

6. Verfahren nach einem der vorhergehenden Ansprüche, bei dem die ersten Linsenformen (5) zumindest teilweise, insbesondere vollständig, umgebende Freiräume (11) zur Trennung des Linsenmaterials benachbarter Mikrolinsen (10) beim Aushärten vorgesehen sind.

7. Verfahren nach einem der vorhergehenden Ansprüche, bei dem eine Schrumpfung der Mikrolinsen (10) während des Aushärtens kompensiert wird.

8. Vorrichtung zur Herstellung einer Vielzahl von Mikrolinsen (10) aus einem Linsenmaterial mit:
- einem ersten Stempel (3) mit an einer Prägeseite (3o) des ersten Stempels (3) verteilten ersten Linsenformen (5),
- einer ersten Aufnahmeeinrichtung zur Aufnahme des ersten Stempels (3) an einer von der Prägeseite (3o) abgewandten Aufnahmeseite (3a), wobei der erste Stempel (3) mittels der ersten Aufnahmeeinrichtung um 180° gedreht werden kann, wobei die Drehung mittels eines Roboterarms erfolgt,
- einer zweiten Aufnahmeeinrichtung zur Aufnahme eines zweiten Stempels (4) an dessen von seiner Prägeseite (4o) abgewandten Aufnahmeseite (4a),
- Aufbringmitteln zur Aufbringung des zum Prägen der Mikrolinsen (10) vorgesehenen Linsenmaterials, insbesondere eines aushärtbaren Fluids (3), insbesondere Polymers, in fluider Form auf die ersten Linsenformen (5),
- Prägemitteln zum Prägen der Mikrolinsen durch Formung und Aushärtung des Linsenneaterials, wobei die Formung durch Aufeinander-zu-Bewegung des ersten Stempels (3) und des zweiten Stempels (4) in Z-Richtung erfolgt, insbesondere durch Mittel zur Positionssteuerung des ersten (3) und zweiten Stempels (4) relativ zueinander,
wobei Messmittel zum Messen einer Prägekraft beim Prägen vorgesehen sind, mittels derer das Prägen, insbesondere zumindest während des Aushärtens, beeinflussbar ist, insbesondere durch Kraftsteuerung, vorzugsweise zusätzlich zu der Positionssteuerung.

9. Vorrichtung nach Anspruch 8, die derart ausgebildet ist, dass das Linsenmaterial jeder Mikrolinse (10) durch die Aufbringmittel derart aufbringbar ist, dass es zumindest während des Aushärtens getrennt von dem Linsenmaterial jeder in der X-Y-Ebene benachbarten Mikrolinse (10) ist.

10. Vorrichtung nach Anspruch 8 oder 9, die derart ausgebildet ist, dass durch X-Y-Ausrichtungsmittel der Vorrichtung während des Aushärtens und/oder während des Prägens eine X-Y-Ausrichtung der ersten Prägeseite (3o) gegenüber der zweiten Prägeseite (4o) in einer X-Y-Ebene durchführbar ist.

11. Vorrichtung nach mindestens einem der Ansprüche 8 bis 10, die derart ausgebildet ist, dass zum Keilfehlerausgleich und/oder zur X-Y-Ausrichtung im ersten Stempel (3), insbesondere an der ersten Prägeseite (3o), vorzugsweise zumindest an einem Umfangsrand (3u) des ersten Stempels (3), erste Ausrichtungsmarken (6, 6') vorgesehen sind, die zu zweiten Ausrichtungsmarken (7, 7') des zweiten Stempels (4) korrespondierend angeordnet sind.

12. Vorrichtung nach mindestens einem der Ansprüche 8 bis 11, bei der die Aufbringmittel als Tropfenaufbringmittel, insbesondere einem Tropfen-Dispenser (1), ausgebildet sind.

13. Vorrichtung nach mindestens einem der Ansprüche 8 bis 12, wobei die Vorrichtung die ersten Linsenformen (5) zumindest teilweise, insbesondere vollständig, umgebende Freiräume (11) zur Trennung des Linsenmaterials benachbarter Mikrolinsen (10) beim Aushärten aufweist.

14. Vorrichtung nach mindestens einem der Ansprüche 8 bis 13, wobei die Vorrichtung Kompensationsmittel zur Kompensation einer Schrumpfung der Mikrolinsen (10) während des Aushärtens aufweist.

## Claims

1. A method for producing a plurality of microlenses (10) from a lens material with the following steps, with the following sequence:
- application of the lens material which is intended for the embossing of the microlenses (10) in fluid form, to a plurality of first lens molds (5) distributed on a first embossing side (3o) of a first die (3) for embossing of the microlenses (10),
- turning the first die (3) by 180°, so that the receiving side (3a) points up,
- moving the first die (3) and a second die (4) located essentially parallel, namely in an X-Y plane, and opposite the first die (3), towards one another in a Z-direction which runs essentially perpendicular to the X-Y plane, especially by position control,
- embossing the microlenses (10) by shaping and curing the lens material, the shaping taking place by moving the first and second embossing sides (3o, 4o) towards one another,
wherein an embossing force is measured during embossing, by means of which the embossing, especially at least during the curing, can be influenced, especially by force control, preferably in addition to the position control.

2. The method as claimed in Claim 1, wherein the lens material of each microlens (10) at least during curing is separate from the lens material of each microlens (10) which is adjacent in the X-Y plane.

3. The method as claimed in Claim 1 or 2, wherein during the curing and/or during the embossing an X-Y alignment of the first embossing side (3o) relative to the second embossing side (4o) takes place in the X-Y plane.

4. The method as claimed in one of the preceding claims, wherein the first die (3) and the second die (4), especially on their embossing sides (3o, 4o), preferably at least on their peripheral edges (3u, 4u), have alignment marks (6, 6', 7, 7') corresponding to one another for wedge fault compensation and/or for X-Y alignment.

5. The method as claimed in one of the preceding claims, wherein the lens material is applied by application of droplets.

6. The method as claimed in one of the preceding claims, wherein there are free spaces (11) which at least partially, especially completely surround the first lens molds (5) for separation of the lens material of adjacent microlenses (10) during curing.

7. The method as claimed in one of the preceding claims, wherein shrinkage of the microlenses (10) is compensated during curing.

8. A device for producing a plurality of microlenses (10) from a lens material with the following:
- a first die (3) with first lens molds (5) distributed on one embossing side (3o) of the first die (3),
- a first receiving apparatus for accommodating the first die (3) on one receiving side (3a) which faces away from the embossing side (3o), wherein the first die (3) can be turned by 180° by means of the first receiving apparatus, wherein the turning takes place by means of a robot arm,
- a second receiving apparatus for accommodating a second die (4) on its receiving side (4a) which faces away from its embossing side (4o),
- application means for application of the lens material which is intended for embossing of the microlenses (10), especially a curable fluid (3), especially polymer, in fluid form to first lens molds (5),
- embossing means for embossing of the microlenses by shaping and curing the lens material, the shaping taking place by movement of the first die (3) and of the second die (4) towards one another in the Z-direction, especially by means for position control of the first (3) and second die (4) relative to one another,
wherein there are measurement means for measuring an embossing force during embossing, by means of which the embossing, especially at least during the curing, can be influenced, especially by force control, preferably in addition to the position control.

9. The device as claimed in Claim 8 which is made such that the lens material of each microlens (10) can be applied by application means such that at least during curing it is separate from the lens material of each microlens (10) which is adjacent in the X-Y plane.

10. The device as claimed in Claim 8 or 9 which is made such that by X-Y alignment of the device during curing and/or during embossing an X-Y alignment of the first embossing side (3o) relative to the second embossing side (4o) can be carried out in one X-Y plane.

11. The device as claimed in at least one of Claims 8 to 10 which is made such that for wedge fault compensation and/or for X-Y alignment in the first die (3), especially on the first embossing side (3o), preferably at least on one peripheral edge (3u) of the first die (3), there are first alignment marks (6, 6') which are arranged corresponding to the second alignment marks (7, 7') of the second die (4).

12. The device as claimed in at least one of Claims 8 to 11, wherein the application means are made as droplet application means, in particular a droplet dispenser (1).

13. The device as claimed in at least one of Claims 8 to 12, wherein the device has free spaces (11) which at least partially, especially completely surround the first lens molds (5) for separation of the lens material of adjacent microlenses (10) during curing.

14. The device as claimed in at least one of Claims 8 to 13, wherein the device has compensation means for compensation of a shrinkage of the microlenses (10) during curing.

## Revendications

1. Procédé pour la fabrication d'une pluralité de microlentilles (10) à partir d'un matériau de lentilles avec les étapes suivantes, avec le déroulement suivant :
- le dépôt du matériau de lentilles prévu pour le matriçage des microlentilles (10), sous forme fluide, sur une pluralité de premières matrices de lentilles (5) réparties sur une première face de matriçage (3o) d'un premier poinçon (3) pour le matriçage des microlentilles (10),
- la rotation du premier poinçon (3) de l'ordre de 180° de manière à ce que la face de réception (3a) soit orientée vers le haut,
- le déplacement l'un vers l'autre du premier poinçon (3) et d'un second poinçon (4) disposé sensiblement parallèlement, à savoir dans un plan X-Y, et en vis-à-vis du premier poinçon (3), dans une direction Z s'étendant sensiblement perpendiculairement au plan X-Y, en particulier par commande de la position,
- le matriçage des microlentille (10) par formage et durcissement du matériau de microlentilles, dans lequel le formage s'effectue par déplacement l'un vers l'autre des première et seconde faces de matriçage (3o, 4o),
dans lequel on mesure, lors du matriçage, une force de matriçage à l'aide de laquelle il est possible d'influencer le matriçage, en particulier au moins pendant le durcissement, en particulier par commande de la force, de préférence en plus de la commande de la position.

2. Procédé selon la revendication 1, dans lequel le matériau de lentilles de chaque microlentille (10) est séparé, au moins pendant le durcissement, du matériau de lentilles de chaque microlentille (10) voisine dans le plan X-Y.

3. Procédé selon la revendication 1 ou 2, dans lequel, pendant le durcissement et/ou pendant le matriçage, un alignement X-Y de la première face de matriçage (3o) par rapport à la seconde face de matriçage (4o) a lieu dans le plan X-Y.

4. Procédé selon l'une des revendications précédentes, dans lequel le premier poinçon (3) et le second poinçon (4) présentent, en particulier sur leurs faces de matriçage (3o, 4o), de préférence au moins sur leurs bords périphériques (3u, 4u), des marques d'alignement (6, 6', 7, 7') respectivement correspondantes les unes aux autres pour la compensation d'une erreur de coin et/ou l'alignement X-Y.

5. Procédé selon l'une des revendications précédentes, dans lequel le dépôt du matériau de lentilles a lieu par dépôt de gouttes.

6. Procédé selon l'une des revendications précédentes, dans lequel des espaces libres (11) entourant au moins partiellement, en particulier complètement les premières matrices de lentilles (5) sont prévus pour la séparation du matériau de lentilles de microlentilles (10) voisines lors du durcissement.

7. Procédé selon l'une des revendications précédentes, dans lequel un retrait des microlentilles (10) est compensé pendant le durcissement.

8. Dispositif pour la fabrication d'une pluralité de microlentilles (10) à partir d'un matériau de lentilles avec :
- un premier poinçon (3) avec des premières matrices de lentilles (5) réparties sur une face de matriçage (3o) du premier poinçon (3),
- un premier dispositif de réception pour la réception du premier poinçon (3) d'un côté de réception (3a) tournant le dos à la face de matriçage (3o), dans lequel le premier poinçon (3) peut être tourné de 180° au moyen du premier dispositif de réception, dans lequel la rotation s'effectue au moyen d'un bras de robot,
- un deuxième dispositif de réception pour la réception d'un second poinçon (4) sur son côté de réception (4a) tournant le dos à sa face de matriçage (4o),
- des moyens de dépôt pour le dépôt du matériau de lentilles prévu pour la matriçage des microlentilles (10), en particulier d'un fluide (3) pouvant durcir, en particulier un polymère, sous forme fluide, sur les premières matrices de lentilles (5),
- des moyens de matriçage pour le matriçage des microlentilles par formage et durcissement du matériau de microlentilles, dans lequel le formage a lieu par déplacement l'un vers l'autre du premier poinçon (3) et du second poinçon (4) en direction Z, en particulier grâce à des moyens pour la commande de la position des premier (3) et second (4) poinçons l'un par rapport à l'autre,
dans lequel des moyens de mesure pour mesurer une force de matriçage lors du matriçage sont prévus, à l'aide desquels il est possible d'influencer le matriçage, en particulier au moins pendant le durcissement, en particulier par commande de la force, de préférence en plus de la commande de la position.

9. Dispositif selon la revendication 8, lequel est réalisé de manière à ce que le matériau de lentille de chaque microlentilles (10) peut être déposé grâce aux moyens de dépôt de manière à ce qu'il soit séparé du matériau de lentilles de chaque microlentille (10) voisine dans le plan X-Y, au moins pendant le durcissement.

10. Dispositif selon la revendication 8 ou 9, lequel est réalisé de manière à ce que, grâce à des moyens d'alignement X-Y du dispositif, pendant le durcissement et/ou pendant le matriçage, il est possible d'effectuer un alignement X-Y de la première face de matriçage (3o) par rapport à la seconde face de matriçage (4o) dans un plan X-Y.

11. Dispositif selon l'une au moins des revendications 8 10, lequel est réalisé de manière à ce que, pour la compensation d'une erreur de coin et/ou pour l'alignement X-Y on prévoit, dans le premier poinçon (3), en particulier sur la première face de matriçage (3o), de préférence au moins sur un bord périphérique (3u) du premier poinçon (3), des premières marques d'alignement (6, 6') qui sont disposées de manière correspondante à des secondes marques d'alignement (7, 7') du second poinçon (4).

12. Dispositif selon l'une au moins des revendications 8 à 11, dans lequel les moyens de dépôt sont réalisés en tant que moyens de dépôt de gouttes, en particulier en tant qu'un distributeur de gouttes (1).

13. Dispositif selon l'une au moins des revendications 8 à 12, dans lequel le dispositif présente des espaces libres (11) entourant au moins partiellement, en particulier complètement les premières matrices de lentilles (5) pour la séparation du matériau de lentilles de microlentilles (10) voisines lors du durcissement.

14. Dispositif selon l'une au moins des revendications 8 à 13, dans lequel le dispositif présente des moyens de compensation pour la compensation d'un retrait des microlentilles (10) pendant le durcissement.
